# EUROPEAN PATENT SPECIFICATION

(11) **EP 1 544 168 B1**
(45) Date of publication and mention of the grant of the patent: **07.03.2007**
(21) Application number: 04257782.5
(22) Date of filing: 15.12.2004
(51) Int. Cl.: C01B 33/029

(54) **Method for producing nanoparticles**
Verfahren zur Herstellung von Nanopartikeln
Procédé de production de nanoparticules

(30) Priority: 18.12.2003 KR 2003093168
(43) Date of publication of application: 22.06.2005
(73) Proprietor: SAMSUNG ELECTRONICS CO., LTD., Suwon-si, Gyeonggi-do 442-742 (KR)
(72) Inventor: Khang, Yoon-ho 505-1402 Manhyeon Maeul 5-danji I, Yongin-si, Gyeonggi-do (KR)
(74) Representative: Greene, Simon Kenneth

(56) References cited:
- EP-A- 1 308 418
- US-A- 6 068 800
- NICHOLS, W.T. ET.AL.: "Bimodal nanoparticle size distributions produced by laser ablation of microparticles in aerosols" JOURNAL OF NANOPARTICLE RESEARCH, vol. 4, no. 5, 2002, pages 423-432, XP002325417

## Description

The present invention relates to a method for producing nanoparticles, and more particularly, to a method for producing uniformly sized nanoparticles in large scale.

Representative techniques for the vapor phase synthesis of nanoparticles include thermal decomposition, and laser ablation using a bulk solid material or an aerosol powder as a target.

With respect to the thermal decomposition technique, nanoparticles are synthesized by thermal decomposition of a precursor. This technique is relatively simple and can easily control the size of the nanoparticles. However, since the size of the nanoparticles is mainly determined by the concentration of the precursor, the concentration of the precursor must be required to be decreased in order to synthesize smaller-sized nanoparticles. Therefore, synthesis of large amounts of nanoparticles is difficult.

Meanwhile, in the laser ablation of a bulk solid target, unlike the thermal decomposition technique in which heat is applied to the entire surface of a reactor for nanoparticle synthesis, only the bulk solid target, which is a source material for nanoparticles, is locally heated and then rapidly cooled. Therefore, this technique can reduce the synthesis duration of the nanoparticles, thereby reducing the size of the nanoparticles, in spite of a relatively high concentration of precursors, as compared to the thermal decomposition technique. However, since only a portion of the bulk solid target is ablated by laser beam, the concentration of the nanoparticles is very high near a heated portion of the target. In this respect, to control the excess growth of the nanoparticles, the pressure of a reactor where the ablation occurs must be decreased. However, when the amount of vapor generated by the laser beam is excessively high, the concentration control of the nanoparticles by pressure adjustment may be difficult. For this reason, the mass production of nanoparticles by the laser ablation of the bulk solid target may be very difficult.

The laser ablation of an aerosol powder was made in view of the problems of the above-described laser ablation of the bulk solid target. According to this technique, vapor is generated from each powder spatially dispersed, unlike the laser ablation of the bulk solid target. Therefore, vapor can be generated in a relatively low concentration, as compared to the laser ablation of the bulk solid target, which makes it possible to produce nanoparticles under a higher pressure. The use of a higher pressure enables the production of relatively large amounts of the nanoparticles. However, Producing aerosol containing submicron particles which are suitable for the ablation is very difficult. If larger particles are used to produce aerosol, some portion of particles is remained unablated. Since unablated particles need to be removed, this makes the production of nanoparticles may be complicated.

US 6068800 describes a method of producing nanoscale particles in bulk. In one embodiment, a liquid precursor is injected with a carrier gas through a plasma nozzle. The laser beam atomizes the liquid precursor forming fine droplets. The plasma and laser energy breaks the molecular bonds of the liquid precursor forming -ultra-fine elemental particles.

Nichols et al, in "Biomodal nanoparticle size distribution produced by laser ablation of microparticles in aerosols", Journal of Nanoparticle Research, volume 4, pages 423-432, 2002, describes an alternative nanoparticle production process. A laser ablation technique is used on a flowing aerosol of microparticles.

According to an aspect of the present invention, there is provided a method for producing nanoparticles according to claim 1.

The present invention provides a simple method for producing nanoparticles in large scale.

The vapor phase method may be thermal decomposition, laser ablation, or sputtering.

The thermal decomposition may be any method known in the pertinent art. In particular, the thermal decomposition may include supplying a mixture of a precursor containing a source material for the nanoparticles and a carrier gas to a thermal decomposition furnace previously heated to induce thermal decomposition of the precursor and growing the aerosol particles of 10 to 1,000 nm from a thermal decomposition product of the precursor.

Preferably, the laser beam has an energy density above the critical energy density determined by a used target material. The laser beam may be a pulse beam or a continuous beam. For example, silicon nanoparticles may be produced by the ablation of KrF or XeCl excimer laser.

The laser beam for the ablation of the aerosol particles prepared by the thermal decomposition in the production of the nanoparticles may be applied in any direction with respect to the aerosol particles. However, the laser beam may be applied in parallel to the flow direction of the aerosol particles.

The above and other features and advantages of the present invention will become more apparent by describing in detail exemplary embodiments thereof with reference to the attached drawing in which:

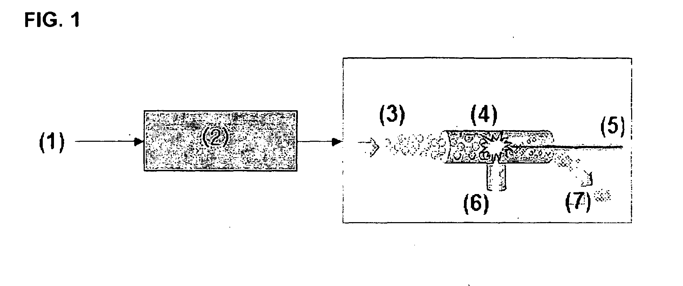

FIG. 1 is an illustrative diagram of a method for producing nanoparticles according to an embodiment of the present invention.

Hereinafter, the present invention will be described in more detail.

According to the present invention, a laser ablation technique is essentially used in a method for producing nanoparticles. However, a target material used as a source material in the laser ablation of the present invention is aerosol particles prepared by a vapor phase method without using a separate apparatus, unlike a conventional technique using a bulk target such as a wafer, or an aerosol made from a micron-sized powder using an aerosol generator. The aerosol particles have a particle size of 1 micron or less, and preferably 10 to 1,000 nm.

The vapor phase method may be thermal decomposition, laser ablation, or sputtering. The thermal decomposition is preferable.

The aerosol particles of 1 micron or less can be easily prepared by thermal decomposition of a precursor. For example, silicon aerosol particles of 1 micron or less can be prepared by the thermal decomposition of SiH₄. In a conventional thermal decomposition technique, since nanoparticles are directly prepared by the thermal decomposition, mass production of the nanoparticles is very difficult. However, in the present invention, since the aerosol particles prepared by the thermal decomposition are used as source materials for nanoparticles, they can have a relatively large particle size (10 to 1,000 nm), thereby ensuring the mass production of the nanoparticles.

The thermal decomposition used in the production of the nanoparticles may include supplying a mixture of a precursor containing a source material for the nanoparticles and a carrier gas to a thermal decomposition furnace previously heated to induce thermal decomposition of the precursor and growing the aerosol particles of 10 to 1,000 nm from a thermal decomposition product of the precursor, but is not limited thereto.

As described above, the aerosol particles of 1 micron or less prepared by the thermal decomposition is subjected to laser ablation to produce the nanoparticles.

Preferably, the laser beam has an energy density of 0.1 to 10 J/cm² at a pulse length of 1 to 100 nanoseconds and 10⁸ to 10¹¹ Watt/cm² at a pulse length of less than 1 nanosecond or more than 100 nanoseconds. Preferably, the wavelength of the laser beam is in a range of 0.15 to 11 microns.

In the laser ablation of the aerosol particles for the production of the nanoparticles, it is preferable to apply the laser beam in parallel to the flow direction of the aerosol particles of 1 micron or less prepared by the thermal decomposition because an effect of more than twice application of the laser beam to the same aerosol particles can be obtained. By doing so, the conversion efficiency of the aerosol particles of 1 micron or less to the nanoparticles increases. As a result, most or all of the aerosol particles can be converted to the nanoparticles.

The above-described embodiment of the present invention is illustrated in FIG. 1. Referring to FIG. 1, a mixed gas 1 of a precursor and a carrier gas is supplied to a thermal decomposition furnace 2 to prepare large aerosol particles 3 of 10 to 1,000 nm by thermal decomposition. The aerosol particles are then carried to a laser ablation reactor 4. At this time, an additional carrier gas 6 is supplied to the laser ablation reactor 4 via a separate inlet to carry the aerosol particles. The additional carrier gas 6 may be omitted. When a predetermined laser beam 5 is applied to the aerosol particles, small nanoparticles 7 are produced by laser ablation. At this time, the laser beam may be applied in parallel to the flow direction of the aerosol particles to obtain a more preferable result.

Hereinafter, the present invention will be described more specifically by Examples. However, the following Examples are provided only for illustrations and thus the present invention is not limited to or by them.

### Example 1

### A. Preparation of aerosol particles of 1 micron or less by thermal decomposition

SiH₄ was used as a precursor and a nitrogen gas was used as a carrier gas. At this time, the flow rate of SiH₄ was 2 sccm and the flow rate of the nitrogen gas was 2 SLM. A mixture of the carrier gas and the precursor was supplied to a thermal decomposition furnace previously heated. The thermal decomposition furnace was a quartz tube that was electrically heated to 950°C. The quartz tube had a capacity to an extent that the mixture of the precursor and the carrier gas resided in the tube for about 6 seconds. The precursor supplied into the thermal decomposition furnace was decomposed into silicon and hydrogen by thermal decomposition. The silicon was grown into silicon particles. Under the above-described growth conditions, the silicon particles had an average particle size of 0.1 to 0.2 microns. The silicon particles were suspended in the carrier gas to form aerosol, and thus, could be easily carried to a laser ablation reactor.

### B. Production of nanoparticles by laser ablation

The silicon aerosol particles prepared in Section A can be easily carried to the laser ablation reactor by adjusting the pressure of the thermal decomposition furnace to be higher than that of the laser ablation reactor. In this Example, the SiH₄ and the carrier gas were pumped toward the laser ablation reactor using a vacuum pump. For this, a pressure adjustment valve for uniformly maintaining the pressure of the thermal decomposition furnace was installed between the laser ablation reactor and the vacuum pump. The aerosol particles, which had been carried into the laser ablation reactor by a pressure difference, passed through the laser ablation reactor in a constant flow rate and direction. At this time, when laser beam was applied to the aerosol particles, vapor was generated by the laser ablation of the aerosol particles. The laser beam was applied in parallel to the flow direction of the aerosol particles. The laser beam had an energy density of 3 J/cm² at a pulse length of 25 nanoseconds. The wavelength of the laser beam was 0.248 microns. The nanoparticles thus produced were deposited on a substrate in a separate deposition chamber connected to the laser ablation reactor via a stainless tube.

### Comparative Example 1

Silicon aerosol particles were prepared in such a manner that silicon powders were pressed to form cylindrical cakes which were then scraped off and mixed with a nitrogen gas. At this time, the flow rate of the nitrogen gas was 1-3 lither/min. Wright II (BGI Inc.) was used as an aerosol generator.

The silicon aerosol particles thus prepared were carried to a laser ablation reactor and then were vaporized by the ablation of laser beam. The laser beam was applied in parallel to the flow direction of the silicon aerosol particles and had an energy density of 5 J/cm² at a pulse length of 25 nanoseconds. The wavelength of the laser beam was 0.248 microns. After the laser ablation, nanoparticles and particles larger than nanoscale were separated by an impactor which is a device used to separate particles by size using inertia. The nanoparticles were deposited on a substrate in a separate deposition chamber connected to the laser ablation reactor via a stainless tube.

### Experimental Example 1: Measurement of concentration of aerosol particles

The concentrations of the aerosol particles of Example 1 and Comparative Example 1 were measured by light scattering technique.

According to the measurement results, the aerosol particles of Comparative Example 1 exhibited a very large concentration change with time, as compared to those of Example 1. This might be caused by formation of non-uniform cakes from the silicon powders and change in amount of the scraped cakes.

### Discussion:

The aerosol particles of Comparative Example 1 exhibited a large concentration change with time due to non-uniform formation of cakes from the silicon powders and change in amount of the scraped cakes. Since the concentration of the aerosol particles to be ablated changed with time, the concentration of vapor generated by the laser beam changed with time. Therefore, the size distribution of the nanoparticles closely related to the vapor concentration increased. Generally, it is very difficult to prepare aerosol particles of 1 micron or less using a conventional aerosol generator. The conversion efficiency of the aerosol particles of more than 1 micron to vapor by the laser ablation is very low.

For example, laser beam with wavelength of 0.248 microns can be penetrated to the depth of 10-20 nanometers of silicon aerosol particles. In this regard, most parts of aerosol particles of more than 1 micron remain large-sized powders because they cannot absorb laser beam. On the other hand, like in Example 1, when aerosol particles as small as 1 micron or less are used as a target of laser beam, the efficiency of the laser ablation rapidly increases. That is, when sufficiently small particles prepared by thermal decomposition are used as a target of laser ablation, all the particles can be converted to nanoparticles. Therefore, the production efficiency of the nanoparticles increases, and at the same time, the use of a separate device such as an impactor used to separate larger-sized particles, like in Comparative Example 1, is not required.

According to the present invention, since particles of 1 micron or less are prepared by a vapor phase method, in particular, thermal decomposition method, and then ablated by laser beam, production of larger-sized particles can be prevented. Therefore, a separate process for removing the larger-sized particles is not required. This is in contrast to a conventional nanoparticle production technique in which laser ablation of micron-sized aerosol particles produces both nanoparticles and particles larger than nanoscale.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method for producing nanoparticles (7), which comprises:
preparing aerosol particles of 10 to 1,000 nm; and
ablating the aerosol particles by laser beam (5) in a laser ablation reactor (4) to produce the nanoparticles;
**characterised in that** preparing the aerosol particles includes preparing aerosol particles (3) by a vapour phase method; and
further **characterised by** carrying the generated aerosol particles (3) to the laser ablation reactor (4).

2. The method of claim 1, wherein the vapor phase method is thermal decomposition, laser ablation, or sputtering.

3. The method of claims 1 or 2 wherein the preparation of the aerosol particles (3) comprises supplying a mixture of a precursor (1) containing a source material for the nanoparticles and a carrier gas to a thermal decomposition furnace (2) previously heated to induce thermal decomposition of the precursor and growing the aerosol particles (3) of 10 to 1,000 nm from a thermal decomposition product of the precursor (1).

4. The method of any preceding claim, wherein the laser beam (5) has an energy density of 0.1 to 10 J/cm² at a pulse length of 1 to 100 nanoseconds.

5. The method of any preceding claim, wherein the laser beam (5) has an energy density of 10⁸ to 10¹¹ Watt/cm² at a pulse length of less than 1 nanosecond or more than 100 nanoseconds.

6. The method of any preceding claim, wherein the laser beam (5) has a wavelength of 0.15 to 11 microns.

7. The method of any preceding claim, wherein the laser beam (5) is applied in parallel to the flow direction of the aerosol particles (3).

8. The method of claim 3 wherein the precursor is SiH₄.

## Patentansprüche

1. Verfahren zur Herstellung von Nanopartikeln (7), das umfasst:
Vorbereiten von Aerosolpartikeln von 10 bis 1000 nm; und
Ablation der Aerosolpartikel mit Laserstrahl (5) in einem Laserablationsreaktor (4) zur Herstellung der Nanopartikel;
**dadurch gekennzeichnet, dass** das Vorbereiten der Aerosolpartikel ein Vorbereiten von Aerosolpartikeln (3) nach einem Dampfphasenverfahren beinhaltet; und
ferner **dadurch gekennzeichnet, dass** die erzeugten Aerosolpartikel (3) zum Laserablationsreaktor (4) geführt werden.

2. Verfahren nach Anspruch 1, wobei das Dampfphasenverfahren thermische Zersetzung, Laserablation oder Sputtern ist.

3. Verfahren nach Anspruch 1 oder 2, wobei das Vorbereiten der Aerosolpartikel (3) ein Zuführen einer Mischung einer Vorstufe (1), die ein Quellenmaterial für die Nanopartikel enthält, und eines Trägergases zu einem Ofen (2) für thermische Zersetzung umfasst, der zuvor erwärmt wurde, um eine thermische Zersetzung der Vorstufe zu induzieren und die Aerosolpartikel (3) von 10 bis 1000 nm aus einem thermischen Zersetzungsprodukt der Vorstufe (1) zu bilden.

4. Verfahren nach einem der vorhergehenden Ansprüche, wobei der Laserstrahl (5) eine Energiedichte von 0,1 bis 10 J/cm² bei einer Impulslänge von 1 bis 100 Nanosekunden aufweist.

5. Verfahren nach einem der vorhergehenden Ansprüche, wobei der Laserstrahl (5) eine Energiedichte von 10⁸ bis 10¹¹ Watt/cm² bei einer Impulslänge von weniger als 1 Nanosekunde bis mehr als 100 Nanosekunden aufweist.

6. Verfahren nach einem der vorhergehenden Ansprüche, wobei der Laserstrahl (5) eine Wellenlänge von 0,15 bis 11 Mikrometern aufweist.

7. Verfahren nach einem der vorhergehenden Ansprüche, wobei der Laserstrahl (5) parallel zur Strömungsrichtung der Aerosolpartikel (3) angelegt wird.

8. Verfahren nach Anspruch 3, wobei die Vorstufe SiH₄ ist.

## Revendications

1. Procédé de production de nanoparticules (7), qui comprend :
la préparation de particules d'aérosol de 10 à 1000 nm ; et
l'ablation des particules d'aérosol par un faisceau laser (5) dans un réacteur d'ablation au laser (4) pour produire les nanoparticules ;
**caractérisé en ce que** la préparation des particules d'aérosol comprend la préparation de particules d'aérosol (3) par un procédé en phase vapeur ; et
**caractérisé en outre par** le fait d'amener les particules d'aérosol (3) générées vers le réacteur d'ablation au laser (4).

2. Procédé selon la revendication 1, dans lequel le procédé en phase vapeur est la décomposition thermique, l'ablation au laser ou la pulvérisation.

3. Procédé selon la revendication 1 ou 2, dans lequel la préparation des particules d'aérosol (3) comprend l'envoi d'un mélange d'un précurseur (1) contenant un matériau source pour les nanoparticules et un gaz porteur vers un four à décomposition thermique (2) préalablement chauffé pour provoquer une décomposition thermique du précurseur et le développement des particules d'aérosol (3) de 10 à 1000 nm à partir d'un produit de décomposition thermique du précurseur (1).

4. Procédé selon l'une quelconque des revendications précédentes, dans lequel le faisceau laser (5) a une densité d'énergie de 0,1 à 10 J/cm² à une longueur d'impulsion de 1 à 100 nanosecondes.

5. Procédé selon l'une quelconque des revendications précédentes, dans lequel le faisceau laser (5) a une densité d'énergie de 10⁸ à 10¹¹ Watt/cm² à une longueur d'impulsion inférieure à 1 nanoseconde ou supérieure à 100 nanosecondes.

6. Procédé selon l'une quelconque des revendications précédentes, dans lequel le faisceau laser (5) a une longueur d'onde de 0,15 à 11 microns.

7. Procédé selon l'une quelconque des revendications précédentes, dans lequel le faisceau laser (5) est appliqué parallèlement à la direction d'écoulement des particules d'aérosol (3).

8. Procédé selon la revendication 3, dans lequel le précurseur est du SiH₄.
